# EUROPEAN PATENT SPECIFICATION

(11) **EP 1 692 664 B1**
(45) Date of publication and mention of the grant of the patent: **14.02.2007**
(21) Application number: 04799160.9
(22) Date of filing: 16.11.2004
(51) Int. Cl.: G06T 17/40

(54) **SYSTEM FOR DISPLAYING IMAGES WITH MULTIPLE ATTRIBUTES**
SYSTEM ZUM ANZEIGEN VON BILDERN MIT MEHREREN ATTRIBUTEN
SYSTEME PERMETTANT D'AFFICHER DES IMAGES AVEC DE MULTIPLES ATTRIBUTS

(30) Priority: 28.11.2003 EP 03104441
(43) Date of publication of application: 23.08.2006
(73) Proprietor: Koninklijke Philips Electronics N.V., 5621 BA Eindhoven (NL)
(72) Inventor: MAAS, Petrus, C. F., NL-5656 AA Eindhoven (NL)
(74) Representative: Cohen, Julius Simon
(86) International application number: PCT/IB2004/052442
(87) International publication number: WO 2005/052866

(56) References cited:
- EZQUERRA N ET AL: "Interactive, knowledge-guided visualization of 3D medical imagery" FUTURE GENERATIONS COMPUTER SYSTEMS, ELSEVIER SCIENCE PUBLISHERS. AMSTERDAM, NL, vol. 15, no. 1, 12 February 1999 (1999-02-12), pages 59-73, XP004156366 ISSN: 0167-739X
- J. E. VAN DER HEYDEN, K. M. INKPEN, M. S. ATKINS, M. SHEELAGH, T. CARPENDALE: "Exploring presentation methods for tomographic medical image viewing" ARTIFICIAL INTELLIGENCE IN MEDICINE, vol. 22, no. 2, 15 May 2001 (2001-05-15), pages 89-109, XP002317180
- "SURVEY ON VISUALISATION METHODS AND SOFTWARE TOOLS" DRAFT SURVEY ON VISUALISATION METHODS AND SOFTWARE TOOLS, XX, XX, June 1997 (1997-06), pages 1-56, XP001048495
- L. CHITTARO: "Information visualization and its application to medicine" ARTIFICIAL INTELLIGENCE IN MEDICINE, vol. 22, no. 2, 15 May 2001 (2001-05-15), pages 81-88, XP002317181
- CHI E H-H ET AL: "A spreadsheet approach to information visualization" INFORMATION VISUALIZATION, 1997. PROCEEDINGS., IEEE SYMPOSIUM ON PHOENIX, AZ, USA 20-21 OCT. 1997, LOS ALAMITOS, CA, USA,IEEE COMPUT. SOC, US, 20 October 1997 (1997-10-20), pages 17-24, XP010257164 ISBN: 0-8186-8189-6
- ROBB R A: "Visualization in biomedical computing" PARALLEL COMPUTING, ELSEVIER PUBLISHERS, AMSTERDAM, NL, vol. 25, no. 13-14, December 1999 (1999-12), pages 2067-2110, XP004363672 ISSN: 0167-8191

## Description

This invention relates to a system for displaying a user selectable subset of images from an image data set, in particular for medical applications, the images being at least two-dimensional and being associated with a set of at least one attribute with a respective range of values. The invention also relates to software for use in such systems. The invention also relates to a method for displaying a user selectable subset of images from an image data set.

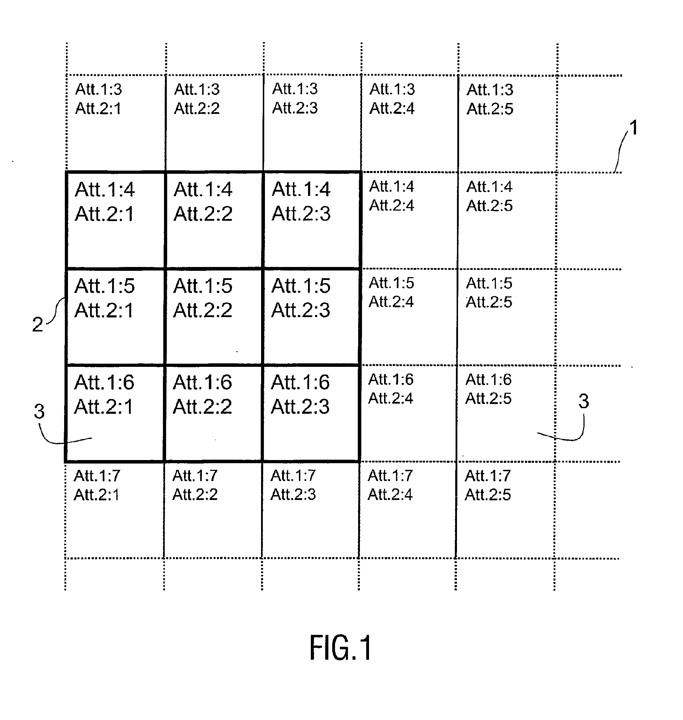

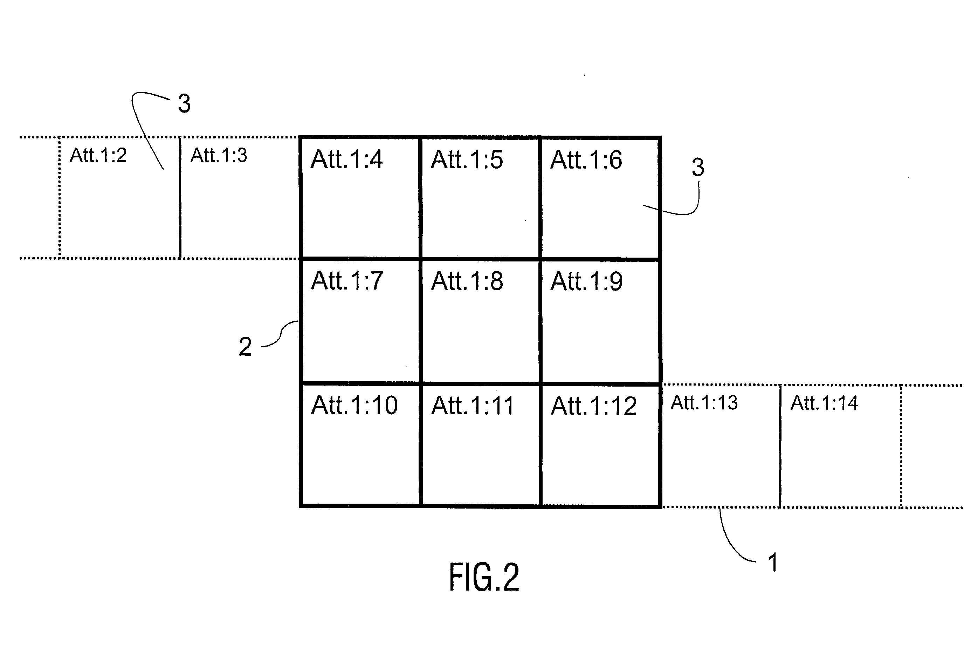

In medical imaging systems, a user has access to complex image data sets, the images being at least two dimensional (hereinafter "2D"). Each data set contains multiple images with one or more attributes. In the case of Magnetic Resonance (hereinafter "MR") images, possible attributes are: type, echo, stack, slice, phase, dynamic, chemical shift and diffusion direction. Slices, for example, are images of spatially successive cross sections of an inspected object, e.g. a brain or a heart. Phases are chronological successive images of one cross section of the inspected object. An MR image data set comprises images with a respective range of values for at least one attribute. Often two, three or even more attributes have a respective range of values. Viewing such image data sets is typically done by displaying the images in a viewing plane. A viewing plane is a 2D matrix of viewports wherein each viewport shows one image. The columns and rows of a viewing plane are each associated with an image attribute. The number of columns and rows in a viewing plane is equal to (the number of values in) the range of the associated attribute. A display shows part of the viewing plane, which part is called the viewport area. An example of a 2D viewport area is shown in Fig. 1. The images in the viewport area 2 have values for the attributes associated with the columns and rows, which values are in a subrange of the range of values for the respective attributes. The images 3 in the image data set shown in Fig. 1 are associated with two attributes (Att.1 and Att.2). The range of both attributes is 1-20. The viewing plane 1 is a 20 by 20 matrix. In this matrix a row comprises images 3 with a constant value for Att.1 and different values for Att.2. A column comprises images 3 with a constant value for Att.2 and different values for Att.1. On the display only part of the viewing plane 1, the viewport area 2, is shown. Only images 3 with values in the subrange 4-6 for Att.1 and with values in the subrange 1-3 for Att.2 are visible. Navigation enables a user to view the other images 3 in the viewport. Navigation through the image set is done by scrolling the viewing plane 1 along columns or rows. Scrolling columns or rows corresponds to selecting the subrange of the range of values for the respective attributes and thus changing the visible part of the viewing plane 1. Scrolling columns or rows is usually done by respectively moving a pointer device, such as a mouse or joystick, substantially parallel to a horizontal x-axis or a vertical y-axis of a display. Scrolling is often done by means of Direct Mouse Manipulation (hereinafter "DMM"), which is Moving a mouse over the image in the desired scroll direction, possibly while holding down one of the mouse buttons. Sometimes a user would prefer to see images with values in a larger subrange of the range of values for an attribute. In this event the viewing plane is a one dimensional (hereinafter "1D") row of viewports wherein each viewport shows one image. On the display the images in the 1D viewport area are placed in a 2D matrix. An example of such a matrix is shown in Fig. 2. In Fig. 2 the same image data set is used as in Fig. 1. The viewing plane 1 now is a row with 20 images. All images 3 have the same value for Att.2 but different values for Att.1. The viewport area 2 comprises nine images 3 with values in the subrange 4-12 for Att.1. For simultaneously showing nine images 3 the viewing plane 1 is folded into a 3 by 3 matrix. In a 1D viewport area 2 scrolling is possible in only one direction (horizontal in Fig. 2).

Often it is desired to navigate through the image set by changing the values of three attributes of the visible images when a 2D viewport area is shown on the display. For example when the rows are associated with different slices and the columns with different echoes, a user may want to change the stack of images. Echoes are images of the same cross section, but with different contrast. In one echo, for example, fluid appears brighter while in another echo bones appear brighter. Images from different stacks show different structures (e.g. a left and a right knee). Scrolling columns and rows is used for changing the value of the first and second attribute. It is more difficult to change the value of the third attribute. For changing the value of the third attribute, special keys on the keyboard or an interactive dialog are used. In the event of a 1D viewport area, presented in a 2D matrix, the keyboard or the dialog are used for navigating through the images with different values for a second attribute. The use of the keyboard or the dialog, is a disturbing action for a physician examining the results of a MRI scan.

It is an object of the invention to provide an improved user interface for enabling easy navigation through a set of images.

With the system of the invention, this object is realized in that a value of an additional attribute is selectable by scrolling substantially parallel to an imaginary z-axis. Scrolling columns or rows corresponds to changing the visible part of a viewing plane. Scrolling in the z-direction will move the entire viewport area back and forth through a pile of viewing plane layers. When the z-axis is, for example, associated with the stack attribute, scrolling in the z-direction will result in display of images of another structure.

If the imaginary z-axis is being realized in a line extending between the x-axis and the y-axis, scrolling in the z-direction is made intuitively. Additional intuitive visual feedback may be given by providing a mouse pointer, showing the scroll direction, during scrolling.

A configuration dialog is provided, for enabling a user to configure which attributes are represented by each of the three axes. Intuitive visual feedback is given by using the same cross axis to represent the possible scrolling directions.

These and other aspects of the invention are apparent from and will be elucidated with reference to the embodiments described hereinafter.

In the drawings:
Fig. 1 shows a schematic representation of a 2D viewport area;
Fig. 2 shows a schematic representation of a 1D viewport area;
Fig. 3 shows a block diagram of a system according to the invention;
Fig. 4 shows a display window according to the invention;
Fig. 5 shows a schematic representation of multiple layers of 2D viewing planes according to the invention;
Fig. 6 shows a schematic representation of the conversion from 2D scrolling directions to 3D navigation;
Fig. 7 shows a schematic representation of multiple layers of a 1D viewport area according to the invention;
Fig. 8 shows a schematic representation of multiple layers of a 2D wrapped viewport area according to the invention;
Fig. 9A-F shows six arrangements for a scrollable directions indicator;
Fig. 10 shows a configurations tab for 2D viewport areas of the configuration dialog according to the invention;
Fig. 11 shows a configurations tab for 1D nested viewport areas;

The system for displaying a user selectable subset of images and a method for doing so will be described for medical applications. It will be appreciated that the system and method can also be applied to other applications as well, in general for inspection of the structure of all objects which can be measured with a system, characterized by the fact that processing of the measurements results in an image data set in which the images are associated with a set of attributes.

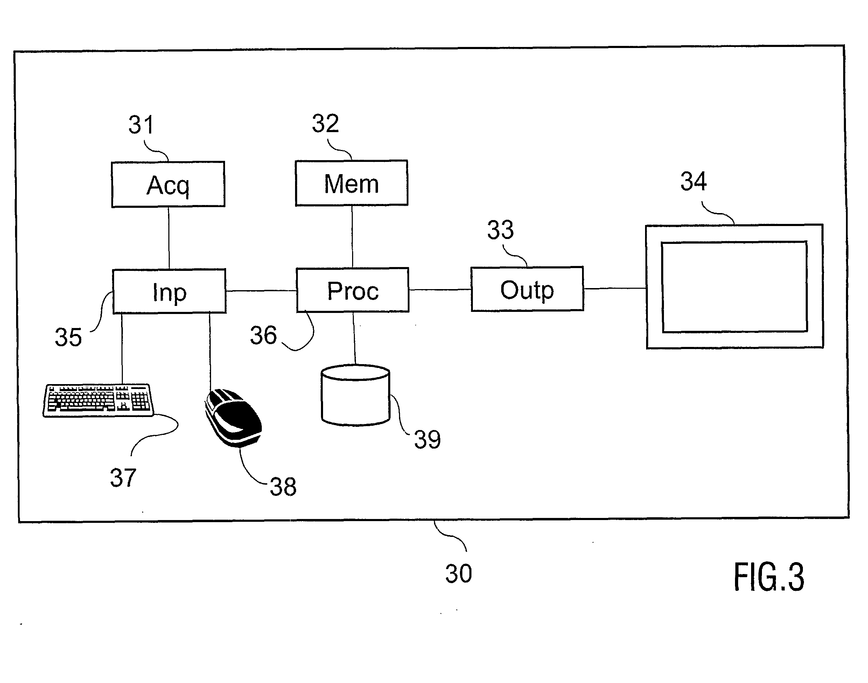

Fig. 3 shows a block diagram of a system according to the invention. The system may be implemented on a conventional computer system such as a workstation or high performance personal computer. The system 30 comprises an input 35 for receiving an image data set. The image data set may be supplied via a conventional computer network; such as Ethernet, or telecommunications network, either wired or wireless, or combinations thereof, or via computer peripherals for reading common information carriers for magnetic or optical recording such as tapes, GD's, DVD's and the like, including solid state memories, such as flash memory. In Fig. 3 the image data set is acquired by an image acquisition device 31, such as a medical Magnetic Resonance (MR) scanner or a Computed Tomography (CT) scanner. Such acquisition device may be part of the system 30, but may also be external to the system 30. The images in the data set may be 2D or 3D. The system 30 includes a storage 39 for storing the image data set. Preferably the storage 39 is of permanent type, such as a hard disk. An output 33 of the system is used for providing pixel values for rendering. The output 33 may supply the pixel values, for example as a bitmapped image through a network to another computer system for display. Alternatively, the output 33 may include a graphics card/chip set for direct rendering of the images on a suitable display 34. The display 34 may, but need not be part of the system 30. A user may control the system 30 via an interface, comprising a manipulation unit such as a keyboard 37 and a mouse 38. Also other suitable means, such as a track ball, joystick or touch pad may be used. The system 30 further includes a processor 36 for, under control of a computer program, processing the image data set to obtain representations of the viewport area for rendering. The program may be loaded from a permanent storage, such as storage 39, into a working memory 32, such as RAM for execution. In the example, the same memory 32 may be used for storing the image data from the storage 39 during execution. If the image data set is too large to be fully stored in the memory 32, the storage 39 may act as a virtual memory.

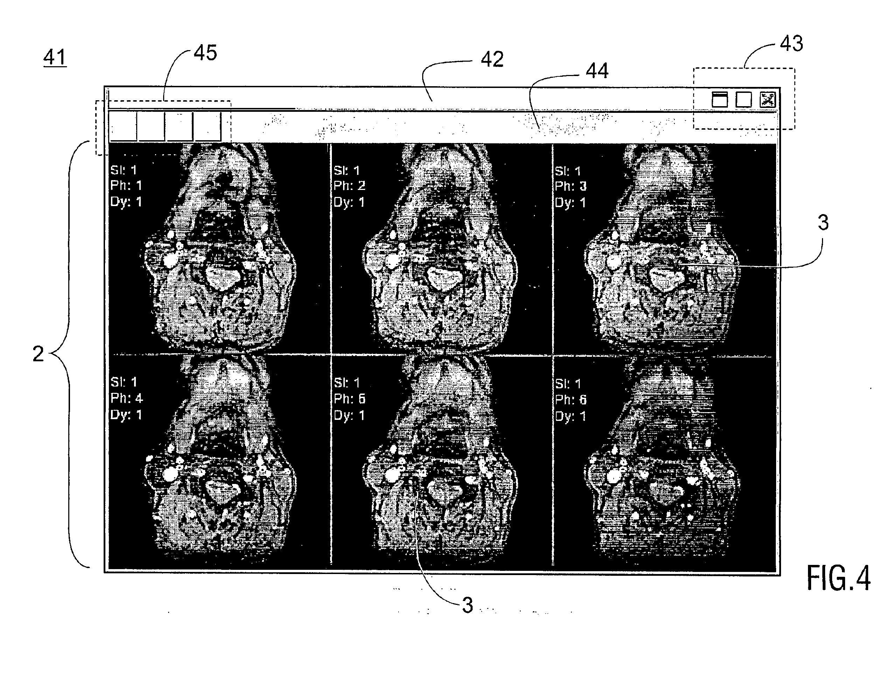

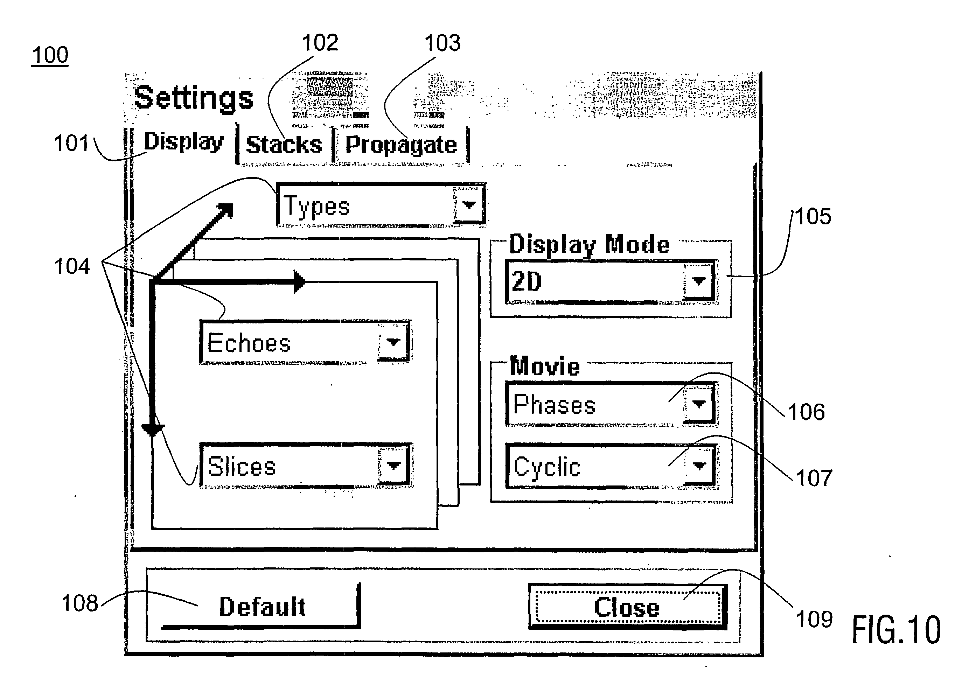

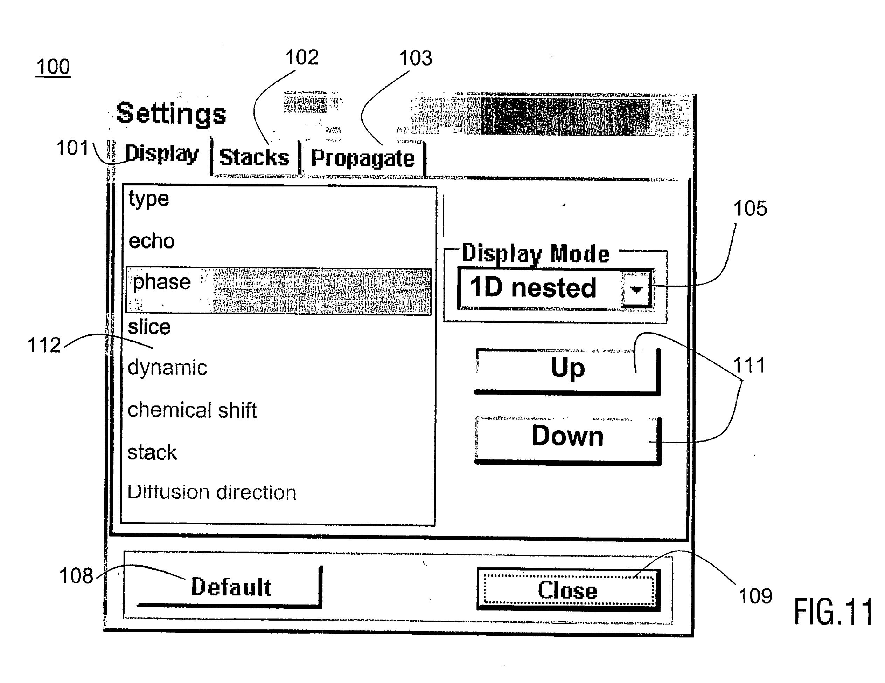

According to the invention, the processor 36 is operative to determine the subset of images to include in the viewport area. The subset comprises images which for one or two attributes have values in a respective subrange of the range of values. Said subranges are determined depending on, for example, the display mode, default settings and configuration and navigation by the user. The arrangement of the images of the subset in the viewport area also depends on the display mode, default settings and configuration by the user. Some examples of display modes and navigation methods are described referring to Fig. 4-9. Fig. 10 and Fig. 11 show examples of configuration dialogs, which enable a user to configure display and navigation modes.

Fig. 4 shows a display window according to the invention. The display window 41 comprises a caption 42, window controls 43, a toolbar 44 and program controls 45. The display window also comprises the viewport area 2. The viewport area is an *n* by *m* matrix with viewports where *n* and *m* are both integers greater than or equal to one. The smallest possible viewport area thus is a 1 by 1 matrix. Each viewport shows one image 3 or, preferably, a user selectable part of an image. In particular the images are for medical applications. The images may, for example, be MR images, CT scans or spectroscopic graphs. When no image 3 is available for a viewport in the viewport area 2, the viewport is, for example, completely black, shows a predetermined pattern or comprises an error message. Said error message may comprise information about the attribute values of the image that is not available.

The caption 42 may show relevant information about the displayed images 3 and it may identify which display mode is used. The caption 42 may also display the name of the image data set from which the images 3 are shown. The window controls 43 are part of a default window view and may comprise controls for showing or hiding the toolbar 44, maximizing or minimizing the display window 41 and closing the display window 41. The program controls 45 are situated on the toolbar 44. Program controls may for example be used for opening, closing or saving (part of) an image data set, editing images, setting display options, zooming or calling configuration dialogs. Controls for adding columns or rows to the viewport area or removing columns or rows from the viewport area may also be present. Another program control may enable the user to easily switch between a one viewport view and the viewport area view. The image 3 comprises a visual representation of the image data for a cross section. The image may also comprise information about its attribute values. The upper right image in the viewport area 2, for example, has the attribute values slice: 1, phase: 3 and dynamics: 1. Other image specific information like, for example, time and date of acquisition may be included. Alternatively the display window 41 is substituted by a full screen representation. Said full screen representation may, for example, also comprise the program controls 45 and a control for enabling the user to switch from the full screen representation to a representation in the display window 41. However navigation is preferably done by means of Direct Mouse Manipulation (DMM), in both the display window and the full screen representation scrollbars may be provided for enabling navigation through the viewing plane.

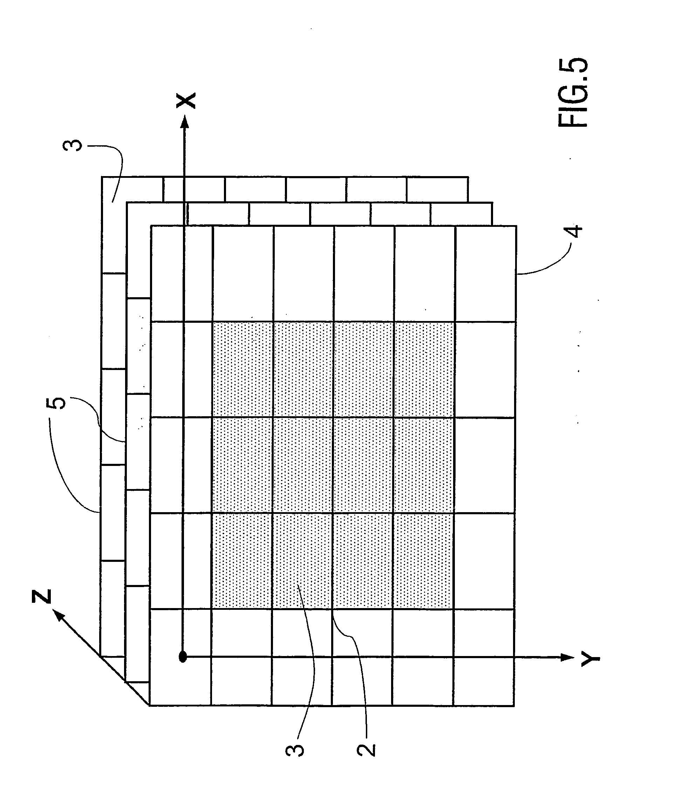

Fig. 5 shows a schematic representation of multiple layers of 2D viewing planes according to the invention. The front layer 4 is a 2D viewing plane. Part of this area, the viewport area 2, is visible on the display. The 2D viewport area 2 comprises viewports with images 3. The x-axis and y-axis are each associated with a respective first and second attribute. Behind the front layer 4 are other layers 5 with viewing planes. In each layer the third attribute, associated with the z-axis, has a different value. The number of layers equals the number of values in the associated attribute. Only one layer comprises a viewport area 2, which is visible on the display.

For example, the x-axis is associated with echoes, the y-axis with slices and the z-axis with types. In this example, all images in one column of viewing plane 4 have the same value for echo, all images in one row have the same value for slice and all images in one layer have the same value for type. The images in the viewport area 2 have values in subranges of the ranges of values for echo and slice and all have the same value for type. The subranges for echo and slice and the value for type are user selectable. Selecting larger subranges results in more, smaller images on the display. Selecting smaller subranges results in less, larger images on the display. When a subrange is equal to the respective range, the images with all different values for the respective attribute are shown. When a upper or lower limit of the subrange is equal to the upper or lower limit of the respective range, scrolling is prohibited in the direction of the respective limit. When, for example, an attribute has a range [1,20] and one row of the viewport area shows images with a value in the subrange [1,3], only scrolling to the right is possible, resulting in the selection of the new subrange [2,4]. Alternative scrolling methods are foreseen. For example, increasing or decreasing subrange limits in steps of two or more will result in faster scrolling. The steps for increasing or decreasing subrange limits may also be variable. For example, when scrolling is started accurate scrolling is possible with small steps and if scrolling is maintained the steps are extended for enabling faster scrolling. Other scrolling methods are well known in the art of programming.

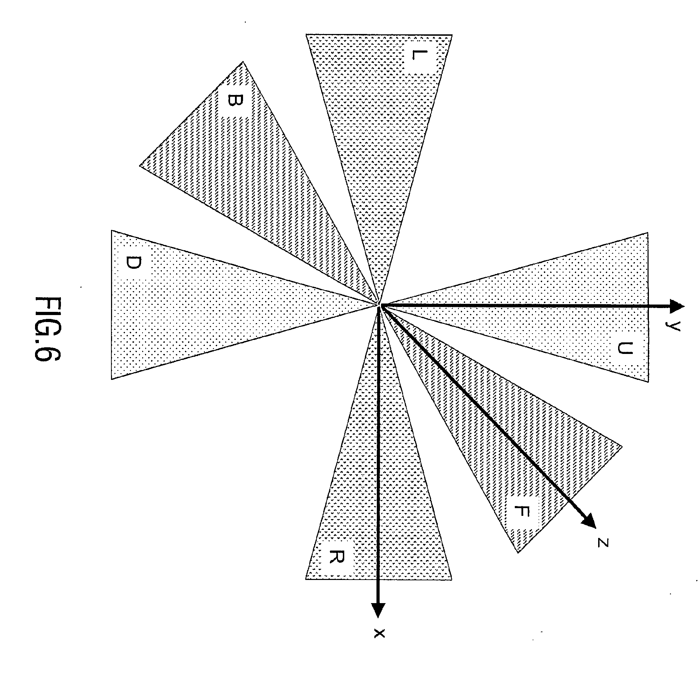

Navigating through the image data set is preferably done by means of DMM. Mouse movements in predetermined directions initiate adjustments to the subranges or to the selected value for the third attribute. During navigation the viewport area moves through the viewing plane or from one layer to another, depending on the direction of the mouse movement. In Fig. 6 the relation between direction of movement of the viewport area and direction of movement of the mouse is schematically shown. Moving the mouse to the right substantially parallel to the x-axis, increases the border values of the subrange. When the direction of the mouse movement lies in area R of Fig. 6, the viewport area moves to the right in the viewing plane. Moving the viewport area to the right is realized by increasing the borders of the subrange of the range of values for the attribute associated with the x-axis. When for example the x-axis is associated with the attribute echo and the selected subrange is [2,4], a mouse movement with the direction in area R will first change the subrange to [3,5], then to [4,6], etcetera. Moving the mouse to the left, with the direction in area L, will move the viewport area to the left in a similar way. Area U and area D, with directions substantially parallel to the y-axes, will result in moving the viewing respectively up and down. When the y-axis is associated with the attribute slice, moving the mouse up and down results in images with other values for the attribute slice to be visible on the display. The value for the third attribute may be changed in a similar way. An imaginary z-axis is realized in a line extending between the x-axis and the y-axis. Moving the mouse substantially parallel to the z-axis results in a changed value for the third attribute. All movements with a direction in the areas F and B are regarded substantially parallel to the z-axis. When the direction of the mouse movement is in area F the value of the third attribute is increased. When the direction of the mouse movement is in area B the value of the third attribute is decreased.

The six areas, R, F, U, L, B and D in Fig. 6 each cover a part of all possible directions between -180° and 180°. When we define the x-axis to have a direction of 0°, the area R comprises all directions between, for example, -15° and 15°. The range of directions covered by each area may be a default value, in the above example 30°, or may be configured by the user. The y-axis has a direction of 90° and the z-axis extends between the x-axis and the y-axes. The z-axis may have a direction of 30°, 45° or any other direction between 0° and 90°. The direction of the z-axis may be a default value, or may be configured by the user. The direction of the z-axis and the range of directions covered by each area have to be defined such that no area overlaps another area. Areas may be adjacent or a no scrolling area may exist between two areas. When a mouse movement has a direction, which is not covered by any area, an already initiated navigation direction may be preserved or no navigation may occur at all. Additional intuitive visual feedback may be given by providing a mouse pointer, showing the scroll direction, during scrolling.

In an embodiment an auto-scroll mode is provided. Such an auto-scroll mode may be realized in that the value of a predetermined attribute of each image is automatically increased or decreased periodically. When the auto-scroll mode is activated the display shows a slide show of all images with a different value for said predetermined attribute. Attributes associated with each of the three axes may be used for auto-scrolling.

When the upper bound value and the lower bound value of a subrange are increased simultaneously the viewport area simply moves through the viewing plane. In a special zoom mode only one of the two border values is changed. This zoom mode may, for example, be activated by holding down a mouse button, or pressing a key on the keyboard while moving the mouse. Alternatively a program control (45 in Fig. 4) may be used for activating the zoom mode. When this zoom mode is activated, moving the mouse to the right, substantially parallel to the x-axis will result in adding a column to the right side of the viewport area. Moving the mouse to the left will result in deleting a column. In a similar way rows may be added or deleted by moving the mouse respectively up or down.

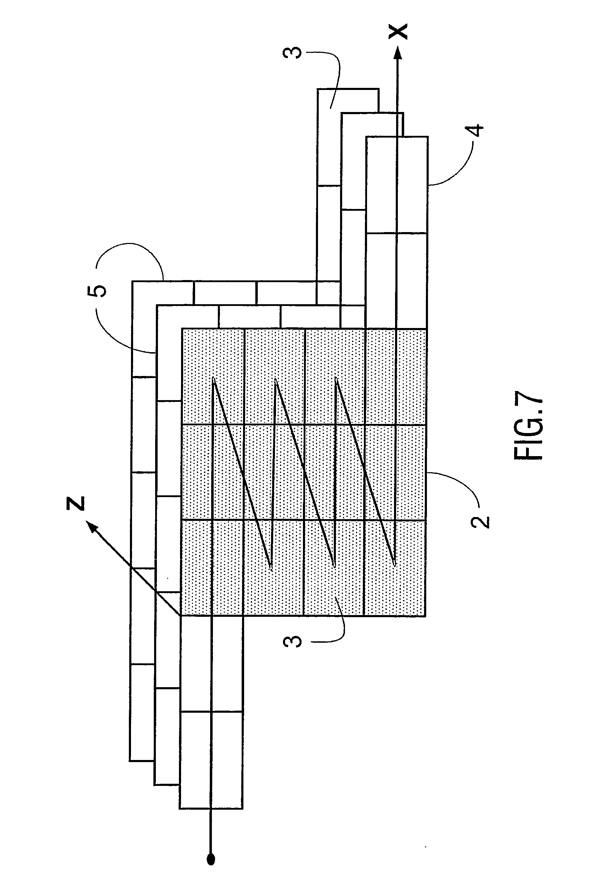

The display mode in Fig. 6 is called a 2D view. The value of a third attribute can be selected by means of DMM because of the introduction of an imaginary z-axis. Fig. 7 shows an example of a 1D view according to the invention. In this event the viewing plane is a 1D row of viewports wherein each viewport shows one image. On the display the images in the 1D viewport area are placed in a 2D matrix. Navigating through images with different values for the attribute associated with the x-axis is described in the introduction. The introduction of an imaginary z-axis enables a user to select the value of a second attribute by means of DMM.

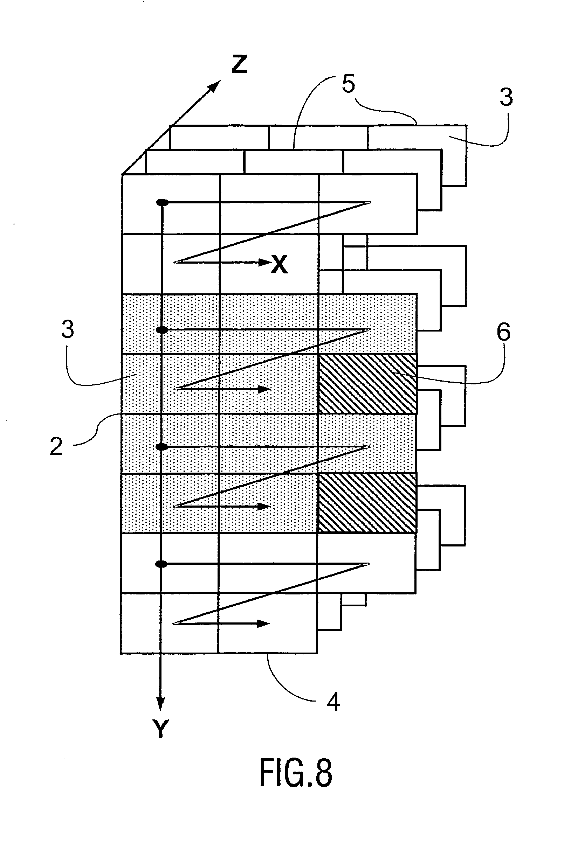

The display mode used in the schematic representation of Fig. 8 is called 2D wrapped. This display mode is particularly useful when the range of one attribute is relatively small. In Fig. 8 the attribute associated with the x-axis has a range with only five values. The viewport area 2 is a four by three matrix. All images on the first row of the viewport area have the same value for the second and third attribute, associated with respectively the y-axis and the z-axis. There are just five images with these values for the second and third attribute. The first three of these five images are shown on the first row of the viewport area. In the normal 2D display mode as showed in Fig. 6, the other two images can be made visible by moving the mouse to the right. In the 2D wrapped display mode these two pictures are placed in the first and second viewport of the second row. The third viewport of the second row 6, does not comprise any picture. This viewport is, for example, completely black or shows some predetermined pattern. The third and fourth row of the viewport area 2 comprise the five images with a value for the second attribute that is one higher than in the first and second row and the same value for the third attribute. Navigating through the images with different values for the third attribute is done by scrolling substantially parallel to the imaginary z-axis.

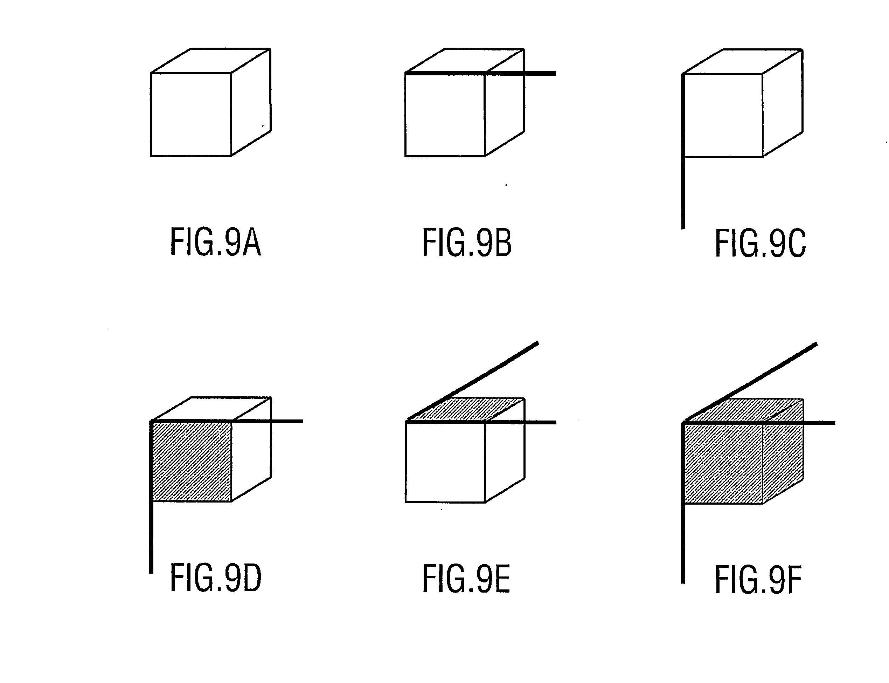

The availability of scrolling directions depends on the display mode and the number of attributes with a range greater than the subrange shown on the display. In order to make it visible in which of the three directions scrolling is possible, the indicators of Fig. 9A-F may be shown on the display. The indicator of Fig. 9A is used when no scrolling is possible at all. This indicator is shown when the images with all values for the attributes associated with the axes are enclosed in the viewport area. When scrolling is possible in the x-direction or the y-direction, Fig. 9B and Fig. 9C are used. The indicators of Fig. 9B and Fig. 9C are used with the 1D display mode, when no attribute is associated with the imaginary z-axis. The indicator of Fig. 9D is used with the 2D display mode, when no attribute is associated with the imaginary z-axis. When an attribute with a range greater than 1 is associated with the z-axis the indicator of Fig. 9E is used with the 1D display mode and the indicator of Fig. 9F is used with the 2D display mode.

Fig. 10 and Fig. 11 show a configuration dialog 100 for the system according to the invention. The dialog 100 is provided in a window, but may also be provided full screen. The dialog 100 enables the user to configure the display of and navigation through the images of the data set. The configuration dialog 100 comprises different tabs 101, 102, 103 for ordering all options in such a way that a user can easily find the option he wants to set. The dialog 100 further comprises a default button 108 for applying default settings to the visible tab of the dialog 100. The default settings may, for example, be applied for all options on one tab or for some options on one or more tabs, depending on the value of another option on the active tab. The default settings may be provided by the manufacturer of the system or may be set and stored by the user. The dialog 100 also comprises a close button 109 for applying the settings and closing the configuration dialog 100.

Fig. 10 shows a display settings tab 101 for setting the display options. A display mode control 105 enables a user to choose a display mode, e.g. 2D, 2D wrapped or 1D. The display mode control 105 preferably is a drop down list, comprising all possible display modes. The other controls on the display settings tab depend on the display mode. In Fig. 10 the display mode is 2D. When in 2D display mode a cross axis is provided on the display settings tab 101. The three axes of the cross axis correspond with the x-, y- and z-direction in the viewport area. Near each of the three axes an attribute control 104 is provided, for enabling a user to select which attribute is associated with which axis. In Fig. 10 the x-axis is associated with echoes, the y-axis with slices and the z-axis with types. The attribute control 104 preferably is a drop down list with all attributes with a range comprising at least two values and which are not already associated with another axis. Alternatively, when an attribute is selected, which is already associated with another axis, both attributes interchange their positions. In some display modes a further attribute may be selected using the movie attribute control 106. In the viewport area the value for the selected movie attribute is periodically increased or decreased. When for example phase is selected as a movie attribute, each viewport shows the changes of a fixed cross section in time, resulting in an ordinary movie of the cross section. When slices is selected as a movie attribute, each viewport will show a movie of a tour through the inspected object. The attributes phase and slice are particularly suited for using as a movie attribute, but also other attributes may be selected as a movie attribute. The movie attribute control 106 preferably is a drop down list, comprising attributes and an option 'none'. When the option 'none' is selected no movie is played at all and movie type control 107 is inactive or even removed from the dialog. When the option 'none' is not selected a movie type control 107 enables a user to choose a playing mode for the movie, e.g: cyclic, play once, play twice or backward.

The display settings tab 101 for the 2D wrapped and 1D display mode are similar to the display settings tab 101 shown in Fig. 10. In 1D display mode, only two axes are associated with an attribute. When a 'none' option is added to the options in the drop down list of attribute control 104, the user may choose which axis not to use for navigation when in 1D view. In another embodiment a first attribute is by default associated with the x-axis, a second and third attribute, if available, are by default associated with respectively the y-axis and the z-axis.

Another display mode is the 1D nested display mode. In this display mode all available images are placed in a viewing plane with one row. The images are placed in the viewing plane according to a sorting order. Fig. 11 shows the display settings tab 101 for the 1D nested display mode. This tab comprises a sorting order list 112 with all available attributes. Only attributes with a range of at least two values can be used for sorting. Attributes, which can be used for sorting, are displayed in e.g. a black font color. Other attributes are displayed in e.g. a gray font color. In Fig. 11 the current sorting order is type, echo, phase, slice. The attribute phase is highlighted. An attribute can be highlighted by clicking on it in the sort order list 112. The sort order buttons 111 are used for moving the highlighted attribute through the list. When in Fig. 11, for example, the 'Up' button would be pressed, the new sort order would become type, phase, echo, slice.

It should be mentioned that the above mentioned embodiments illustrate rather than limit the invention, and that those skilled in the art will be able to design many alternative embodiments without depending from the scope of the appended claims. In the claims, any reference signs placed between parentheses shall not be construed as limiting the claim. Use of the verb "comprise" and its conjugations does not exclude the presence of elements or steps other than those stated in a claim. The article "a" or "an" preceding an element does not exclude the presence of a plurality of such elements. The invention may be implemented by means of hardware comprising several distinct elements, an by means of a suitably programmed computer. In the device claim enumerating several means, several of these means may be embodied by one and the same item of hardware. The mere fact that certain measures are recited in mutually different dependent claims does not indicate that a combination of these measures cannot be used to advantage.

## Claims

1. A system (30) for displaying a user selectable subset of images (3) from an image data set, in particular for medical applications, the images (3) being at least two-dimensional and being associated with a set of at least one attribute with a respective range of values and an additional attribute with a range of values, the system comprising:
an input (35) for receiving the image data set;
a memory (39) for storing the image data set;
an interface for receiving instructions from a user, the interface comprising a manipulation unit (37, 38);
a processor (36) for, under control of a computer program,
- enabling a user to select a respective subrange of the range of values by scrolling substantially parallel to a horizontal x-axis or a vertical y-axis of a display via the manipulation unit (37, 38) and **characterised by**;
- enabling a user to select a value for the additional attribute by scrolling substantially parallel to an imaginary z-axis via the manipulation unit (37, 38);
- determining the subset, by selecting images (3) which for the at least one attribute of the set have values in the respective subrange and which also have the value for the additional attribute;
- generating a view of the subset of images (3); and
an output (33) for providing pixel values of the view for rendering on a display (34).

2. A system (30) as claimed in claim 1, wherein the manipulation unit comprises a pointer device (38) and the imaginary z-axis is being realized in a line extending between the x-axis and the y-axis.

3. A system (30) as claimed in claim 1, wherein a mouse pointer is provided for providing visual feedback during selection of the subranges or the value of the additional attribute.

4. A system(30) as claimed in claim 1, wherein an indicator is provided for indicating along which of the three axes scrolling is possible.

5. A system (30) as claimed in claim 1, wherein a configuration dialog (100) is provided for configuring which attributes are represented by each of the three axes.

6. A system (30) as claimed in claim 1, wherein the processor (36) is arranged for, under control of the computer program,
- changing the subset by periodically increasing or decreasing the value of an attribute of the set or the value of the additional attribute; and
- changing the view according to the changed subset.

7. A system (30) as claimed in claim 1, wherein the processor (36) is arranged for, under control of the computer program,
- periodically increasing or decreasing a value of a further attribute of each image (3), said value not being selectable by scrolling substantially parallel to one of the three axes; and
- changing the view according to the changed value.

8. A method for displaying a user selectable subset of images (3) from an image data set, in particular for medical applications, the images (3)being at least two-dimensional and being associated with a set of at least one attribute with a respective range of values and an additional attribute with a range of values, the method comprising:
receiving and storing the image data set;
enabling a user to select a subrange of the respective range of values by scrolling substantially parallel to a horizontal x-axis or a vertical y-axis of a display via a manipulation unit (37,38), and **characterised by**;
enabling a user to select a value for the additional attribute by scrolling substantially parallel to an imaginary z-axis via the manipulation unit;
determining the subset, by selecting images (3) which for the at least one attribute of the set have values in the respective subrange and which also have the value for the additional attribute;
generating a view of the subset of images; and
providing pixel values of the view for rendering on a display (30).

9. A computer program product operative to cause a processor to perform the method of claim 8.

## Patentansprüche

1. System (30) zum Anzeigen eines vom Benutzer auswählbaren Teilsatzes mit Bildern (3) aus einem Bilddatensatz insbesondere für medizinische Anwendungen, wobei die Bilder (3) mindestens zweidimensional sind und einem Satz mit mindestens einem Attribut mit einem entsprechenden Wertespektrum und einem zusätzlichen Attribut mit einem Wertespektrum zugeordnet sind, wobei das System Folgendes umfasst:
einen Eingang (35) zum Empfangen des Bilddatensatzes,
einen Speicher (39) zum Speichern des Bilddatensatzes,
eine Schnittstelle zum Empfangen von Befehlen von einem Benutzer, wobei die Schnittstelle eine Bedieneinheit (37, 38) umfasst,
einen Prozessor (36) um es, gesteuert von einem Computerprogramm,
- einem Benutzer zu ermöglichen, ein entsprechendes Teilspektrum des Wertespektrums durch Scrollen im Wesentlichen parallel zu einer horizontalen x-Achse oder einer vertikalen y-Achse einer Anzeige mittels der Bedieneinheit (37, 38) auszuwählen,
und **dadurch gekennzeichnet, dass** der Prozessor
- es einem Benutzer ermöglicht, einen Wert für das zusätzliche Attribut durch Scrollen im Wesentlichen parallel zu einer imaginären z-Achse mittels der Bedieneinheit (37, 38) auszuwählen,
- den Teilsatz durch Auswählen von Bildern (3) ermittelt, die für mindestens ein Attribut des Satzes Werte in dem entsprechenden Teilspektrum und auch den Wert für das zusätzliche Attribut haben,
- eine Ansicht des Teilsatzes mit Bildern (3) erzeugt, und
einen Ausgang (33) zum Liefern der Pixelwerte der Ansicht zur Wiedergabe auf einer Anzeige (34).

2. System (30) nach Anspruch 1, wobei die Bedieneinheit eine Zeigevorrichtung (38) umfasst und die imaginäre z-Achse als Linie ausgeführt wird, die zwischen der x-Achse und der y-Achse verläuft.

3. System (30) nach Anspruch 1, wobei ein Mauszeiger geschaffen wird, um ein visuelles Feedback während der Auswahl der Teilspektren oder des Wertes des zusätzlichen Attributs zu liefern.

4. System (30) nach Anspruch 1, wobei ein Indikator geschaffen wird, der angibt, entlang welcher der drei Achsen ein Scrollen möglich ist.

5. System (30) nach Anspruch 1, wobei ein Konfigurationsdialog (100) geschaffen wird um zu konfigurieren, welche Attribute durch jede der drei Achsen dargestellt werden.

6. System (30) nach Anspruch 1, wobei der Prozessor (36) dafür eingerichtet ist, dass er unter der Steuerung des Computerprogramms
- den Teilsatz durch periodisches Erhöhen oder Verringern des Wertes eines Attributs des Satzes oder des Wertes des zusätzlichen Attributs ändert und
- die Ansicht entsprechend dem geänderten Teilsatz verändert.

7. System (30) nach Anspruch 1, wobei der Prozessor (36) dafür eingerichtet ist, dass er unter der Steuerung des Computerprogramms
- periodisch einen Wert eines weiteren Attributs jedes Bildes (3) erhöht oder verringert, wobei der genannte Wert nicht durch Scrollen im Wesentlichen parallel zu einer der drei Achsen ausgewählt werden kann, und
- die Ansicht entsprechend dem geänderten Wert verändert.

8. Verfahren zum Anzeigen eines vom Benutzer auswählbaren Teilsatzes mit Bildern (3) aus einem Bilddatensatz insbesondere für medizinische Anwendungen, wobei die Bilder (3) mindestens zweidimensional sind und einem Satz mit mindestens einem Attribut mit einem entsprechenden Wertespektrum und einem zusätzlichen Attribut mit einem Wertespektrum zugeordnet sind, wobei das Verfahren Folgendes umfasst:
Empfangen und Speichern des Bilddatensatzes,
es einem Benutzer ermöglichen, ein Teilspektrum des entsprechenden Wertespektrums durch Scrollen im Wesentlichen parallel zu einer horizontalen x-Achse oder einer vertikalen y-Achse einer Anzeige mittels einer Bedieneinheit (37, 38) auszuwählen,
und **dadurch gekennzeichnet, dass** es
einem Benutzer ermöglicht, einen Wert für das zusätzliche Attribut durch Scrollen im Wesentlichen parallel zu einer imaginären z-Achse mittels der Bedieneinheit auszuwählen,
den Teilsatz durch Auswählen der Bilder (3) ermittelt, die für mindestens ein Attribut des Satzes Werte in dem entsprechenden Teilspektrum und auch den Wert für das zusätzliche Attribut haben,
eine Ansicht des Teilsatzes mit Bildern erzeugt und
Pixelwerte der Ansicht zur Wiedergabe auf einer Anzeige (34) liefert.

9. Computerprogrammprodukt, das so funktioniert, dass es einen Prozessor veranlasst, das Verfahren nach Anspruch 8 durchzuführen.

## Revendications

1. Système (30) pour afficher un sous-ensemble d'images (3) pouvant être sélectionné par l'utilisateur à partir d'un ensemble de données d'images, en particulier pour des applications médicales, les images (3) étant au moins bidimensionnelles et étant associées à un ensemble d'au moins un attribut avec une gamme respective de valeurs et d'un attribut supplémentaire avec une gamme de valeurs, le système comprenant:
une entrée (35) pour recevoir l'ensemble de données d'images;
une mémoire (39) pour stocker l'ensemble de données d'image;
une interface pour recevoir des instructions d'un utilisateur, l'interface comprenant une unité de manipulation (37, 38);
un processeur (36) pour, sous la commande d'un programme d'ordinateur,
- permettre à un utilisateur de sélectionner une sous-gamme respective de la gamme de valeurs par un défilement sensiblement parallèle à un axe x horizontal ou à un axe y vertical d'un affichage par le biais de l'unité de manipulation (37, 38) et **caractérisé par**;
- la permission pour un utilisateur de sélectionner une valeur pour l'attribut supplémentaire par un défilement sensiblement parallèle à un axe z imaginaire par le biais de l'unité de manipulation (37, 38);
- la détermination du sous-ensemble, en sélectionnant des images (3) qui, pour le au moins un attribut de l'ensemble, ont des valeurs dans la sous-gamme respective et qui ont également la valeur pour l'attribut supplémentaire;
- la génération d'une vue du sous-ensemble d'images (3); et
une sortie (33) pour fournir des valeurs de pixels de la vue aux fins d'un rendu sur un affichage (34).

2. Système (30) suivant la revendication 1, dans lequel l'unité de manipulation comprend un dispositif de pointage (38) et l'axe z imaginaire est réalisé dans une ligne qui s'étend entre l'axe x et l'axe y.

3. Système (30) suivant la revendication 1, dans lequel un pointeur de souris est prévu pour fournir une réaction visuelle pendant la sélection des sous-gammes ou de la valeur de l'attribut supplémentaire.

4. Système (30) suivant la revendication 1, dans lequel un indicateur est prévu pour indiquer le long duquel des trois axes un défilement est possible.

5. Système (30) suivant la revendication 1, dans lequel un dialogue de configuration (100) est prévu pour configurer ceux des attributs qui sont représentés par chacun des trois axes.

6. Système (30) suivant la revendication 1, dans lequel le processeur (36) est destiné à, sous le contrôle du programme de l'ordinateur,
- modifier le sous-ensemble en augmentant ou en diminuant périodiquement la valeur d'un attribut de l'ensemble ou la valeur de l'attribut supplémentaire; et
- modifier la vue selon le sous-ensemble modifié.

7. Système (30) suivant la revendication 1, dans lequel le processeur (36) est destiné à, sous le contrôle du programme de l'ordinateur,
- périodiquement augmenter ou diminuer une valeur d'un autre attribut de chaque image (3), ladite valeur ne pouvant pas être sélectionnée par un défilement sensiblement parallèle à l'un des trois axes; et
- modifier la vue selon la valeur modifiée.

8. Procédé pour afficher un sous-ensemble d'images (3) pouvant être sélectionné par l'utilisateur à partir d'un ensemble de données d'images, en particulier pour des applications médicales, les images (3) étant au moins bidimensionnelles et étant associées à un ensemble d'au moins un attribut avec une gamme respective de valeurs et d'un attribut supplémentaire avec une gamme de valeurs, le procédé comprenant:
la réception et le stockage de l'ensemble de données d'image;
la permission pour un utilisateur de sélectionner une sous-gamme de la gamme respective de valeurs par un défilement sensiblement parallèle à un axe x horizontal ou à un axe y vertical d'un affichage par le biais d'une unité de manipulation (37, 38) et **caractérisé par**;
la permission pour un utilisateur de sélectionner une valeur pour l'attribut supplémentaire par un défilement sensiblement parallèle à un axe z imaginaire par le biais de l'unité de manipulation;
la détermination du sous-ensemble, en sélectionnant des images (3) qui, pour le au moins un attribut de l'ensemble, ont des valeurs dans la sous-gamme respective et qui ont également la valeur pour l'attribut supplémentaire;
la génération d'une vue du sous-ensemble d'images; et
la fourniture de valeurs de pixels de la vue aux fins du rendu sur un affichage (30).

9. Progiciel d'ordinateur à même d'amener un processeur à exécuter le procédé suivant la revendication 8.
